# EUROPEAN PATENT APPLICATION

(11) **EP 2 037 552 A2**
(43) Date of publication of application: **18.03.2009**
(21) Application number: 08164451.0
(22) Date of filing: 16.09.2008
(51) Int. Cl.: H02G 3/32

(54) **Support bracket for mounting wires to floor beams of an aircraft**

(30) Priority: 17.09.2007 US 898835
(71) Applicant: Inflight Investments Inc., St Laurent, Québec H4S 1C7 (CA)
(72) Inventor: Smallhorn, George, St Laurent Québec H4S 1C7 (CA)
(74) Representative: Murnane, Graham John

(57) **Abstract**

A support bracket (1) for mounting wires, cables, conduits and the like (2) to floor beams (3) of an aircraft passenger cabin floor without modification to the floor beams (3). The floor beams (3) have a top flange (4), a bottom flange (5), and a vertical web (6) therebetween. The support bracket (1) includes: a support body (10) having a number of cradles (11) where each cradle (11) has an engaging surface (12) and a tie wrap passage (13); and at least one beam engaging member (14) connected to the support body (10), the beam engaging member (14) having a beam clamping surface (16) and biasing device (17) to urge the beam clamping surface (16) toward the support body (10).

## Description

### TECHNICAL FIELD

The invention relates to a removable support bracket for mounting wires, cables, conduits and the like to the floor beams of an aircraft passenger cabin floor beam without modifying or altering the floor beam.

### BACKGROUND OF THE ART

In the passenger cabins of aircraft an increasingly important component is the provision of passenger entertainment systems, mobile telephone services, laptop power and computer communications connectivity. To improve service, airlines are retrofitting existing aircraft and ordering newly built aircraft with audio and video entertainment on demand, telephone, intercom, television, video games, internet, email and electrical power supply for laptop computers, especially in business class and first class areas to permit passengers to work during the flight, communicate or seek entertainment.

One way of installing equipment and wiring for such systems is to disengage floor panels from the beams supporting the passenger cabin floor. The wiring is run between passenger seats and various computer servers or other electronic equipment under the floor panels. After installation the floor panels are reattached to the floor beams.

A particular concern with installing equipment in an aircraft is that any modification to the aircraft structure could weaken the structure or introduce stress concentrations that lead to metal fatigue and crack propagation. Therefore when installing new equipment in an existing aircraft, drilling holes in floor beams to mount wiring and equipment requires approval from government regulatory inspectors, requires a high degree of accuracy and is generally not preferred for these reasons which add cost and delay.

In a newly built aircraft the manufacturer can provide for mounting brackets and holes in floor beams as part of the original design of the aircraft structure. However such designs do not provide for flexibility in relocating wiring or equipment, during manufacturing or afterwards during the service life of the aircraft.

Accordingly it is desirable to have mounting brackets for wires, cables, conduits and the like that can be attached and removed from aircraft floor beams without modifying the floor beams in any way.

It is further desirable that such mounting brackets be low cost, be of standard or universal design and be as lightweight as possible for an aircraft application.

Features that distinguish the present invention from the background art will be apparent from review of the disclosure, drawings and description of the invention presented below.

### DISCLOSURE OF THE INVENTION

The invention provides a support bracket for mounting wires, cables, conduits and the like to floor beams of an aircraft passenger cabin floor without modification to the floor beams. The floor beams have a top flange, a bottom flange, and a vertical web therebetween. The support bracket includes: a support body having a number of cradles where each cradle has an engaging surface and a tie wrap passage; and at least one beam engaging member connected to the support body, the beam engaging member having a beam clamping surface and biasing device to urge the beam clamping surface toward the support body.

The support body may extend vertically and the beam engaging member may comprise a top flange arm and a bottom flange arm. Each arm may include an end hook adapted to wrap partially around an edge of one of said flanges. Each flange arm may include a biasing device comprising a resilient spring portion.

The body may comprise a top portion and a bottom portion joined with a sliding connection, whereby the height of the body is adjustable. The sliding connection may include mating apertures and detent tabs.

The body may include a removable post having a plurality of cradles wherein each cradle has an engaging surface and a wrap tie passage. The body may include a mounting aperture and the post may include a mounting pin mating the mounting aperture.

The body may include a slotted back wall.

The engaging surface of a first cradle may be oriented perpendicular to the engaging surface of a second cradle.

The beam engaging member may comprise at least one clamping block with a beam clamping surface. The biasing device to urge the beam clamping surface toward the support body may comprise a connector engaging the clamping block and support body. The clamping block may include a fulcrum projection. The body may include a fulcrum recess mating the fulcrum projection.

The beam engaging member may comprise a lateral slot defining an internal beam clamping surface and the biasing device to urge the beam clamping surface toward the support body may comprise a laterally extending connector adapted to join the support bracket with a like support bracket in an opposing pair.

The support bracket may include a spacer plate engageable in said lateral slot.

The web of said beam may include holes defining hole edges, and the beam engaging member may comprise a clamp block with a beam hole edge clamping surface. The biasing device to urge the beam clamping surface toward the support body may comprise a laterally extending connector adapted to join the support bracket with a like support bracket in an opposing pair.

The body may include removable cradles mounted to the body with connectors.

### DESCRIPTION OF THE DRAWINGS

In order that the invention may be readily understood, embodiments of the invention are illustrated by way of example in the accompanying drawings.

Figure 1 is an isometric view of a floor beam for an aircraft passenger cabin floor showing a first embodiment of a support bracket for mounting wires, cables, conduits and the like adjacent the web of the beam typical of a Boeing type aircraft.

Figure 2 is a like isometric view similar to Fig. 1 located overlapping a vertical web stiffener rib in the beam.

Figure 3 shows an front-top isometric view of the support bracket apart from the beam.

Figure 4 shows an rear-bottom isometric view of the support bracket apart from the beam.

Figure 5 shows an front-top isometric view of a second embodiment of the support bracket.

Figure 6 shows an exploded view of the second embodiment of the support bracket.

Figure 7 shows a detail view of the removable post of Fig. 6.

Figure 8 shows an rear-top isometric view of a the support bracket of Fig. 5.

Figure 9 an isometric view of a third embodiment of the support bracket mounted to the top flange, bottom flange, parallel to the webs of transverse and longitudinal floor beams of an AirBus type structure.

Figure 10 shows an front-top isometric view of the third embodiment of the support bracket with a single rear clamping block.

Figure 11 shows an exploded isometric view similar to Fig. 10 but with two clamping blocks.

Figure 12 shows the bracket of Fig.11 installed on a floor beam parallel to the web and clamping the edges of the top and bottom flanges of the beam with two clamping blocks.

Figure 13 shows an isometric view of the single clamping block shown in Fig. 10.

Figure 14 shows an isometric view four support brackets, mounted in opposing pairs to clamp the top flange of a floor beam, and in addition to mount two longitudinal angles to the beam flange.

Figure 15 is an end view along line 15-15 of Fig. 14.

Figure 16 is an exploded isometric view of the pair of support brackets of Fig. 15 comprising two brackets, a spacer plate, an insulating plate, one lateral bolt and four vertical bolts.

Figure 17 shows the same pair of brackets of Fig. 16 but as assembled together.

Figure 18 shows a front isometric view of a fourth embodiment of the invention mounted to edges around holes through the web of a floor beam, instead of to the flanges of the floor beam.

Figure 19 shows a rear isometric view of the embodiment shown in Fig. 18.

Figure 20 shows an isometric view of a bracket as shown in Fig. 18 which mounts to the edges of the holes through the floor beams.

Further details of the invention and its advantages will be apparent from the detailed description included below.

### DETAILED DESCRIPTION OF PREFERRED EMBODIMENTS

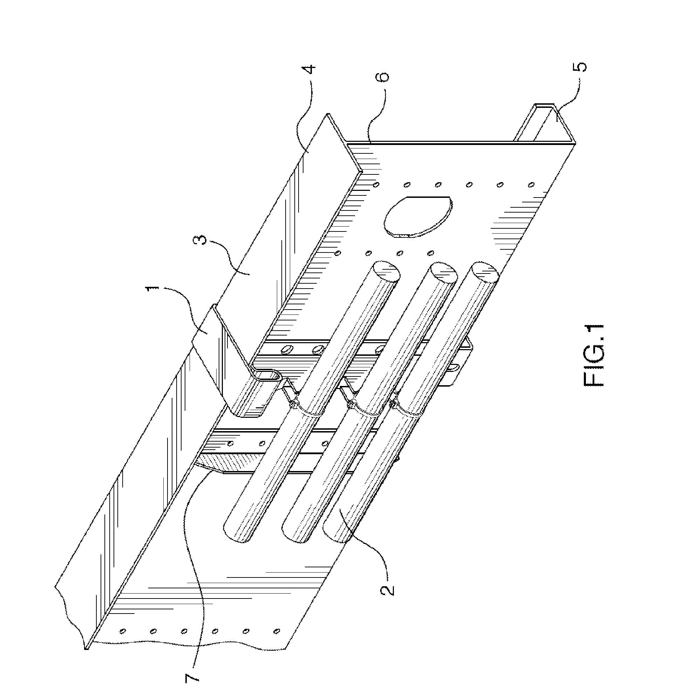

Figures 1-4 illustrate a first embodiment or example of a support bracket 1 for mounting wires 2, cables, conduits and the like to floor beams 3 of an aircraft passenger cabin floor without modification to the floor beams 3. The floor beams 3 having a top flange 4, a bottom flange 5, and a vertical web 6 between the flanges 4, 5.

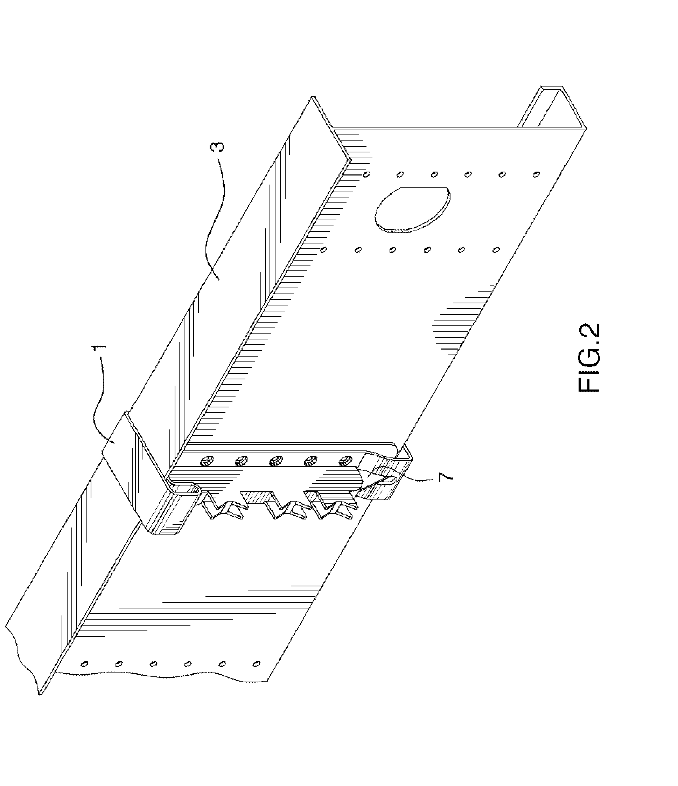

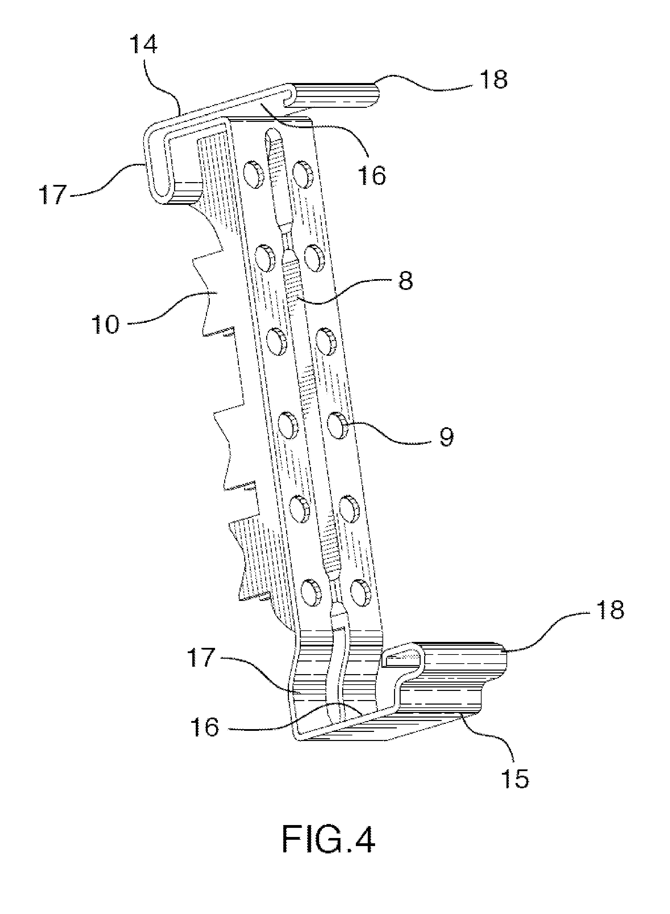

Figure 2 shows the same bracket 1 mounted over a web stiffener 7 on the beam 3. The bracket 1 has a slotted back wall 8 (best seen in Figure 4) to accommodate the web stiffener 8 and perforations 9 in the back wall 8 to accommodate rivets on the web stiffener 8.

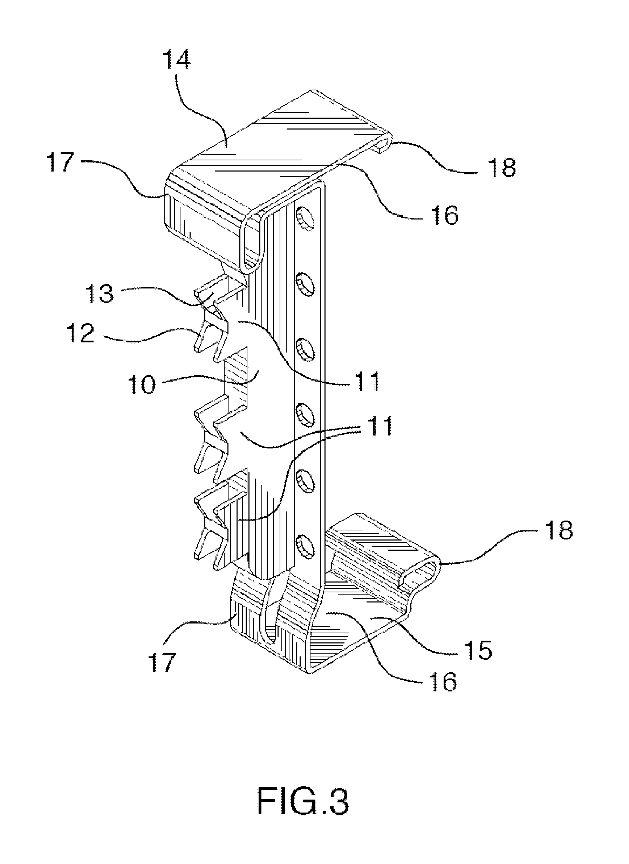

Referring to Figures 3-4, the support bracket 1 has a vertically extending support body 10 having a number of cradles 11 for mounting wire cables with conventional wrap ties (seen in Fig. 1). Each cradle 11 has an engaging surface 12 to contact the wire cable and a tie wrap passage 13. In the illustrated embodiment, the cradles 11 have two flat walls joined by a bar and the tie wrap passage 13 extends between the flat walls and under the bar. Plastic material may be used for molding the brackets 1 which results in low cost, low weight and electrical insulation properties.

The bracket 1 includes at least one beam engaging member 14, 15 connected to the support body 10, which in the first embodiment comprise a top flange arm 14 and a bottom flange arm 15. The flange arms 14, 15 each have a beam clamping surface 16 and biasing resilient spring portion 17 to urge the beam clamping surface 16 toward the support body 10. Each flange arm 14, 15 includes an end hook 18 adapted to wrap partially around an edge of one of said flanges 4, 5 respectively.

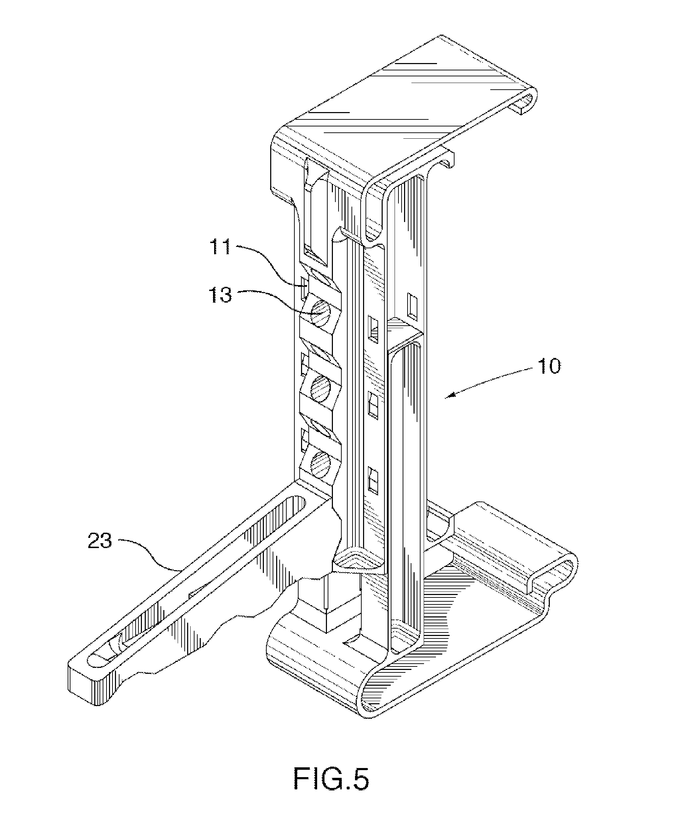

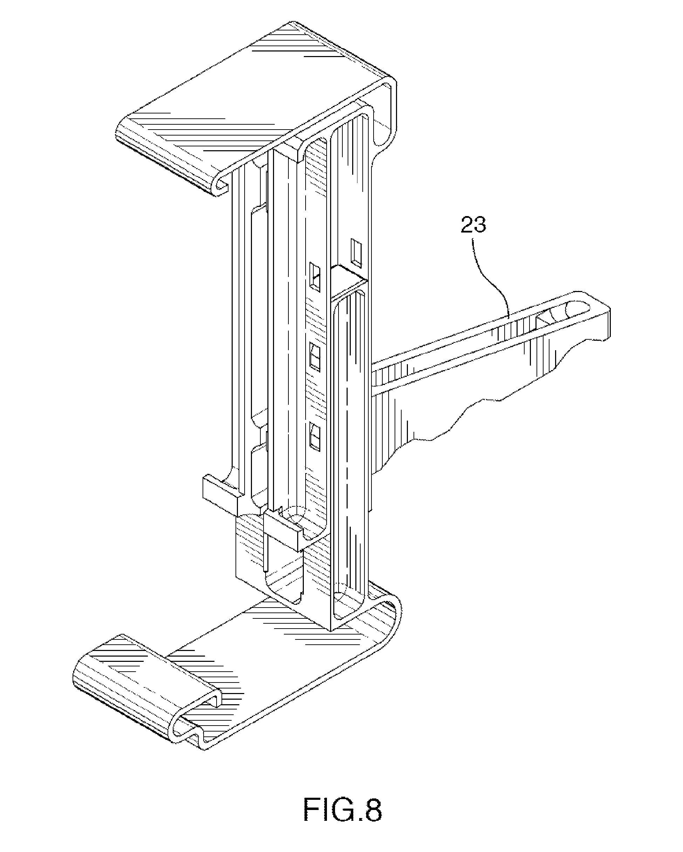

Figures 5-8 show a similar second embodiment of a support bracket 1 where the support body 10 has a top portion 19 and a bottom portion 20 joined with a telescoping or sliding connection, so that the height of the body 10 is adjustable. As shown, the back wall of the top portion 19 is slotted to accommodate the web stiffeners 7 and the bottom portion 19 includes two posts that slide in mating grooves in the top portion 19. The sliding connection includes mating apertures 21 and resilient detent tabs 22 to lock the height of the body 10 in predetermined steps.

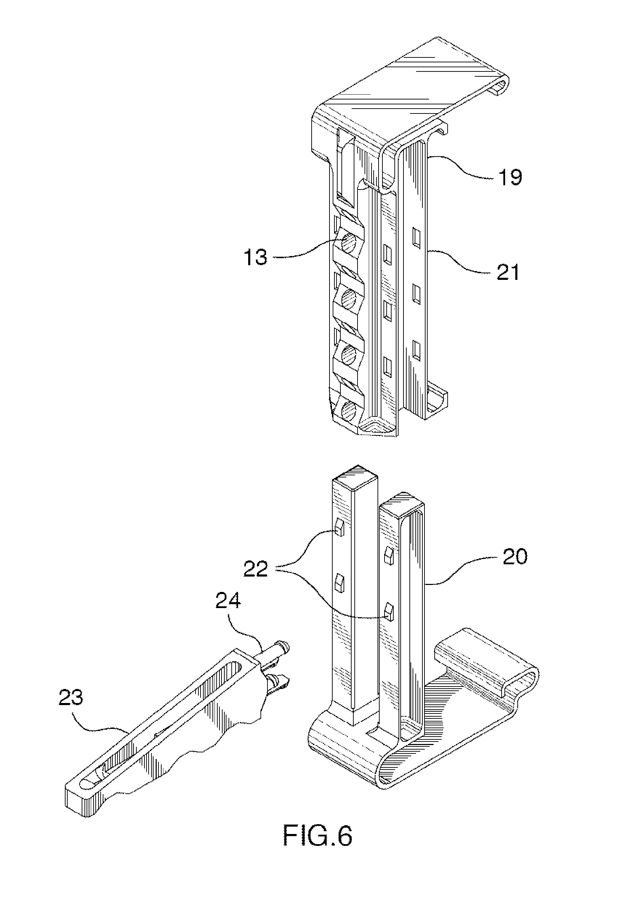

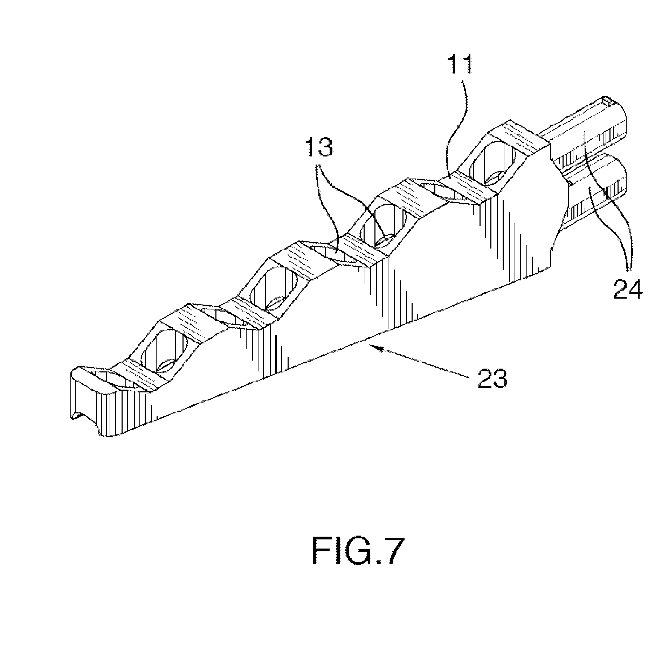

The top portion 19 of the body 10 includes a number of cradles 11 each with a tie wrap passage 13 to support and secure the wire cables with plastic tie wraps. In addition, the body 10 includes a removable post 23 (best seen in the Figure 7 detail) also having a number of cradles 11 and a wrap tie passage 13. As seen in Figure 6, the top portion 19 of body 10 has tie wrap passages 13 which can also serve as a mounting aperture 13 and the post 23 includes a mounting pin 24 mating the mounting aperture 13.

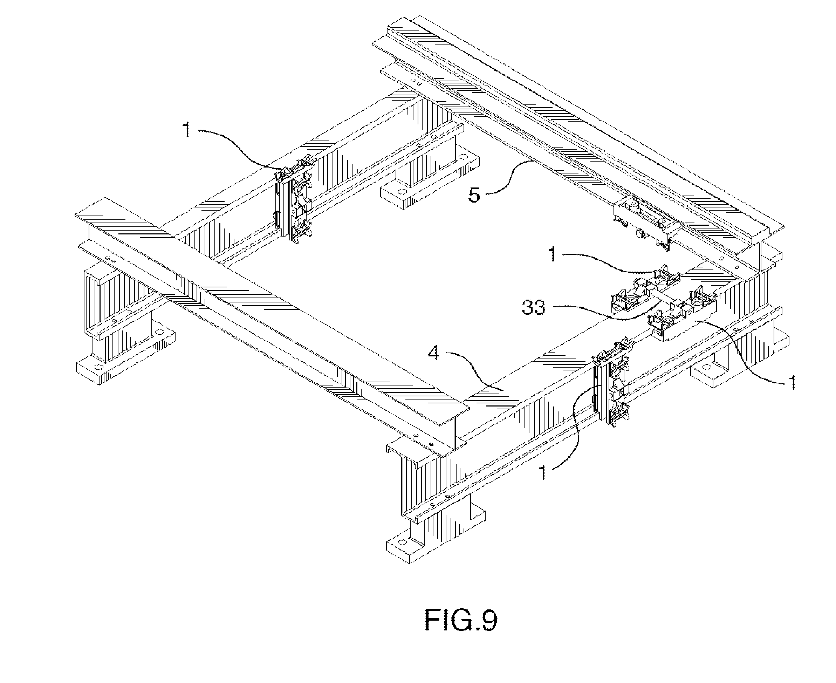

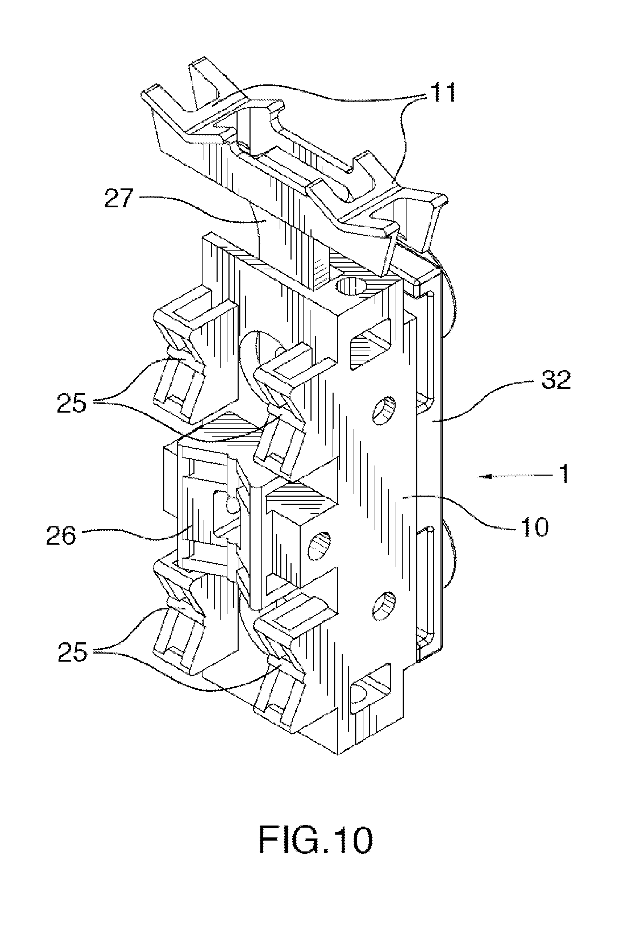

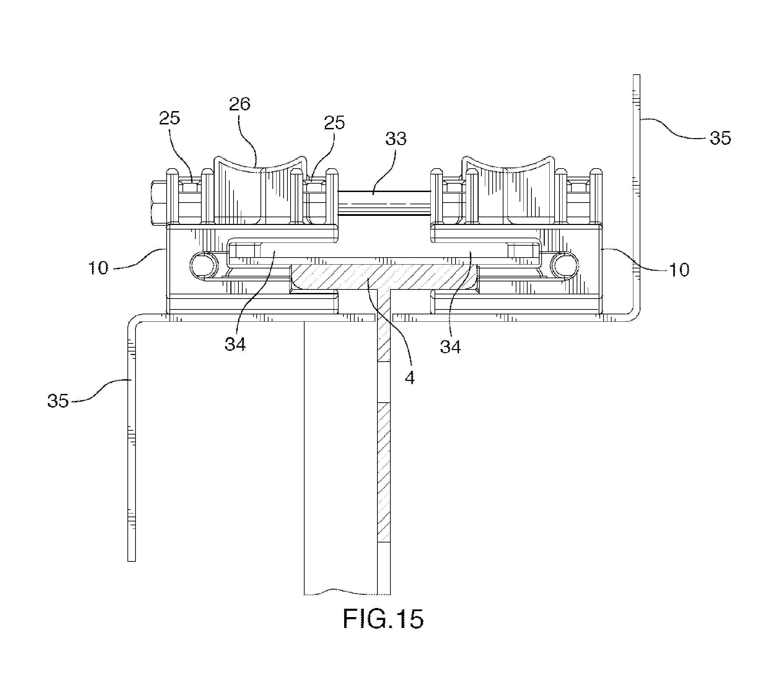

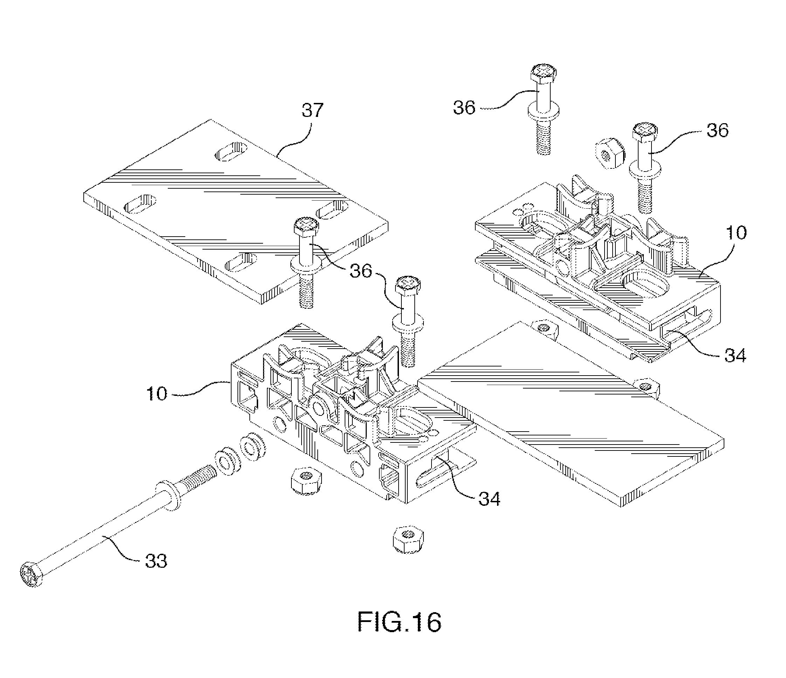

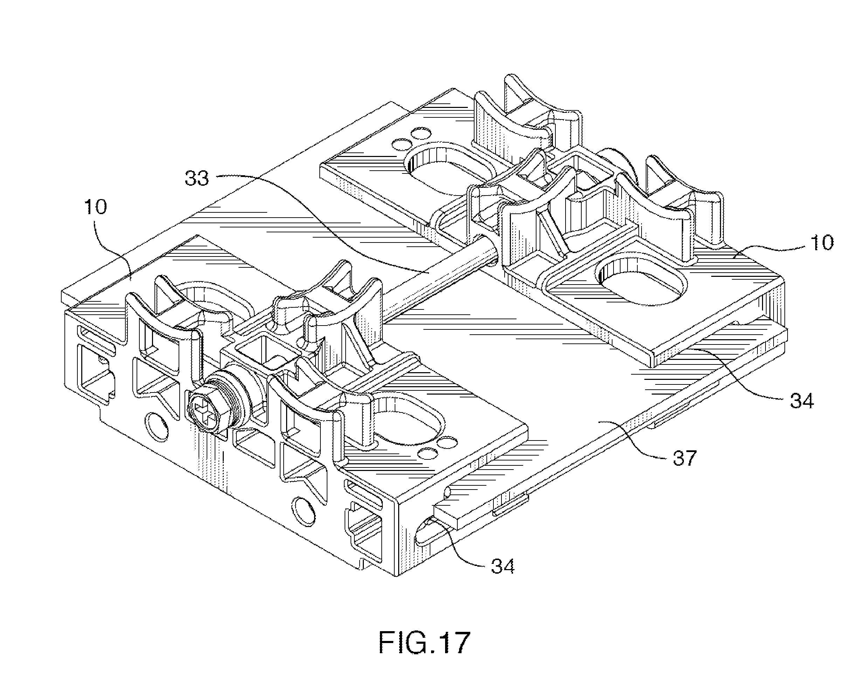

Figures 9-17 show details of a third embodiment of a support bracket 1 (best seen in Figures 10-11) wherein the engaging surface of a first portion of cradles 25 are oriented in a vertical plane whereas the engaging surfaces of a second portion of cradles 26 are oriented in a horizontal plane.

In the third embodiment, the support bracket 1 has rectangular block a support body 10 shaped generally as a rectangular block with a number of cradles 25, 26 on a front surface. A removable T-shaped post 27 with cradles 11 which engages a slot 34 in the body 10 and is secured with a bolt connector 28.

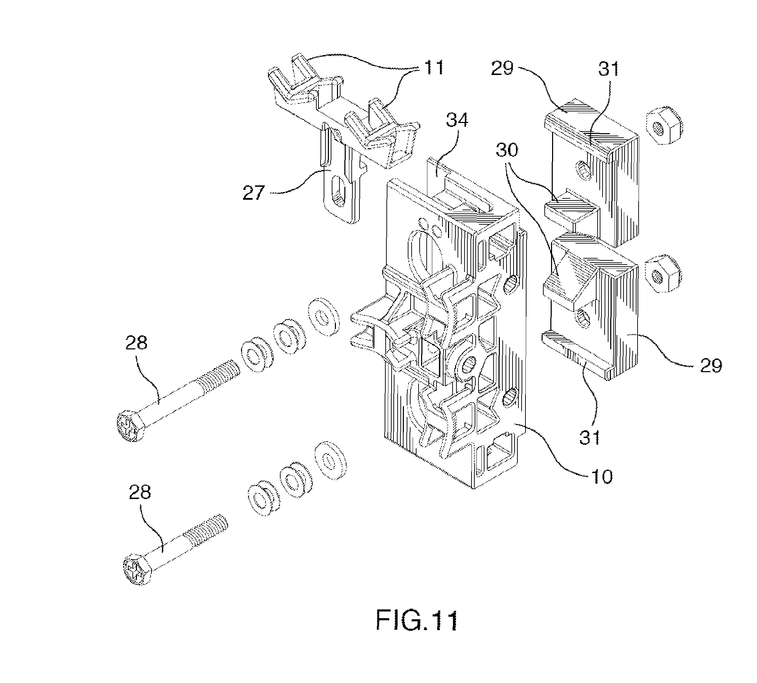

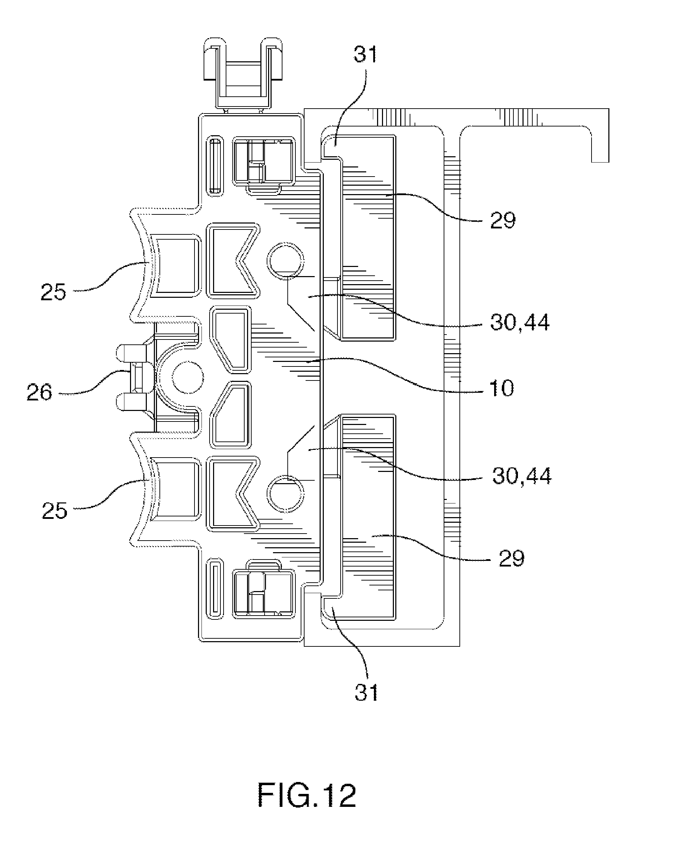

As shown in Figure 12, in the third embodiment, the beam engaging member that is connected to the support body 10 is formed by a pair of clamping blocks 29 each having a beam clamping surface. The clamping blocks 29 are biased or urged toward the support body 10 by the tightening action of the bolts 28 (see Figure 11). Since aircraft undergo turbulence and vibration in operation, the loosening of the bolts 28 is prevented by use of Belleville washers and/or lock nuts.

Referring to Figures 11-12, when two clamping blocks 29 are used, the clamping block 29 includes a fulcrum projection 30 opposite the beam engaging ridge 31. The body 10 includes a fulcrum recess 44 mating the fulcrum projection 30 and tightening of the bolts 28 results in clamping by rotating about the fulcrum projection 30.

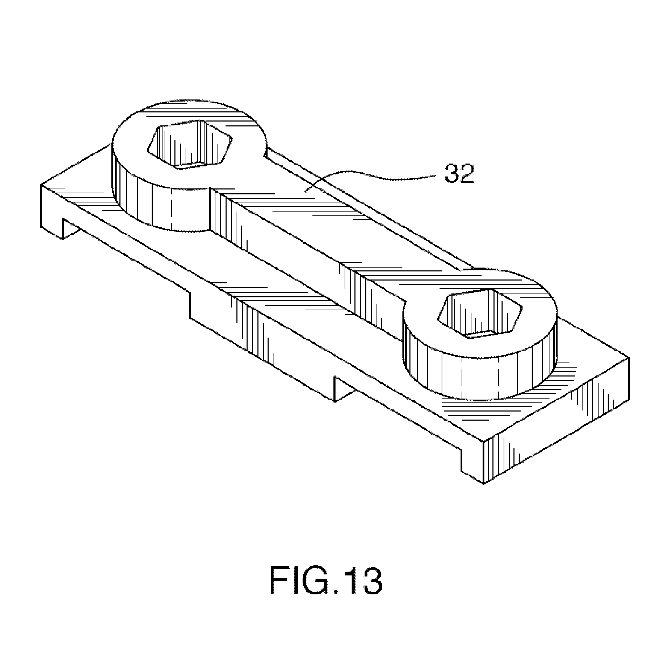

Referring to Figures 10 and 13, an alternative arrangement uses a single clamping block 32 without the fulcrum projection 30 but otherwise clamped against the beam flanges with the bolts 28 in a similar manner.

As shown in Figure 9, a pair of like support brackets 1 can be joined with a laterally extending connector 33 to clamp on the top flange 4 or bottom flange 5 of a floor beam and thereby enable wire, cables or conduits 2 to be secured in the cradles 25, 26. As best seen in the detail views of Figures 11, 15-17 when arranged in a paired configuration, the beam engaging member comprises a lateral slot 34 defining an internal beam clamping surface and the biasing device to urge the beam clamping surface toward the support body 10 is the laterally extending connector 33 that joins both support brackets 10 with a like support bracket 10 in an opposing pair.

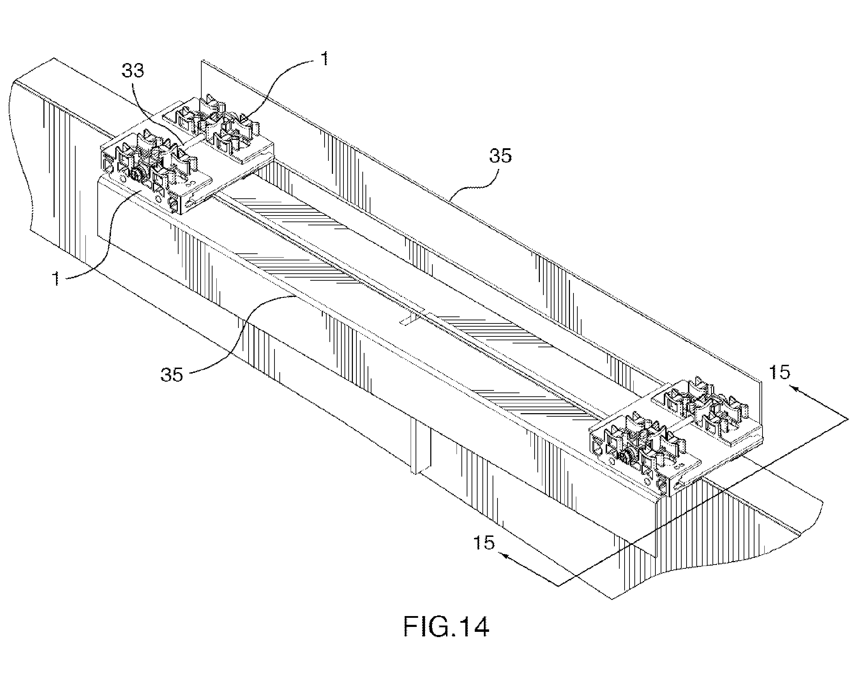

This paired arrangement can be used, as in Figures 14-15 to mount angles 35 with bolts 36 through the same holes that are used to bolt the clamping blocks 29, 32 in other arrangements. Further to limit the compression applied to the flanges 4, 5, the bolts 36 can be used to secure a spacer plate 37 engageable in said lateral slot 34.

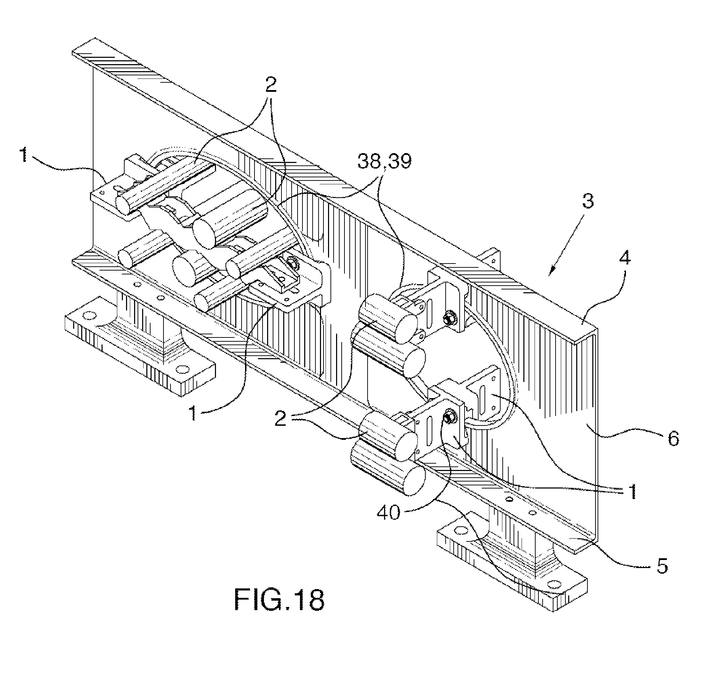

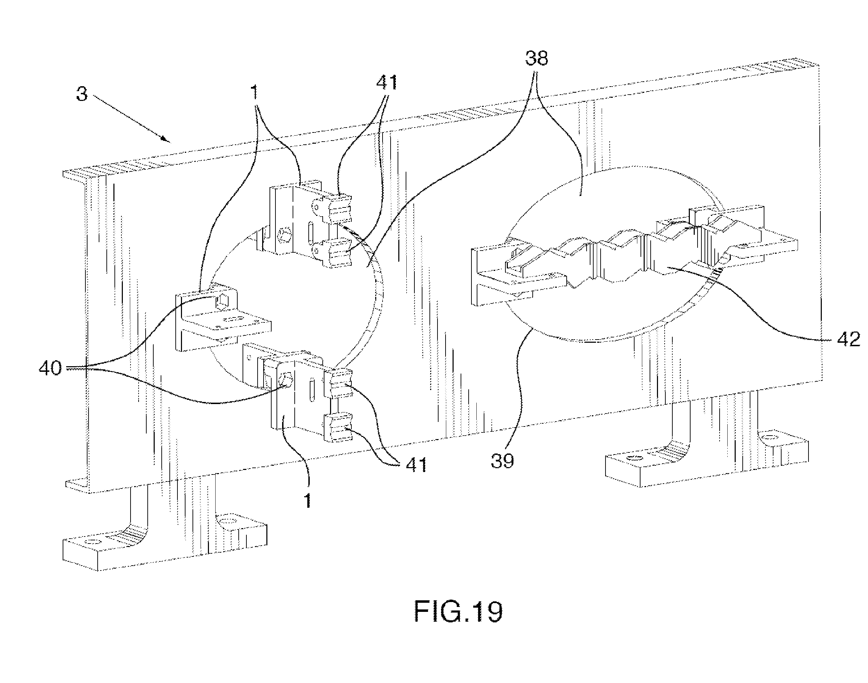

Figures 18-20 illustrate a fourth embodiment wherein the web 6 of the floor beam 3 includes holes 38 defining hole edges 39 to which the support bracket 1 can be secured instead of to the flanges 4, 5. Pairs of support blocks 1 are connected together with bolts 40 to clamp against the edge 39 of the hole 38. Removable individual cradles 41 and removable multiple cradles 42 can be attached with bolts to the pairs of support brackets 1.

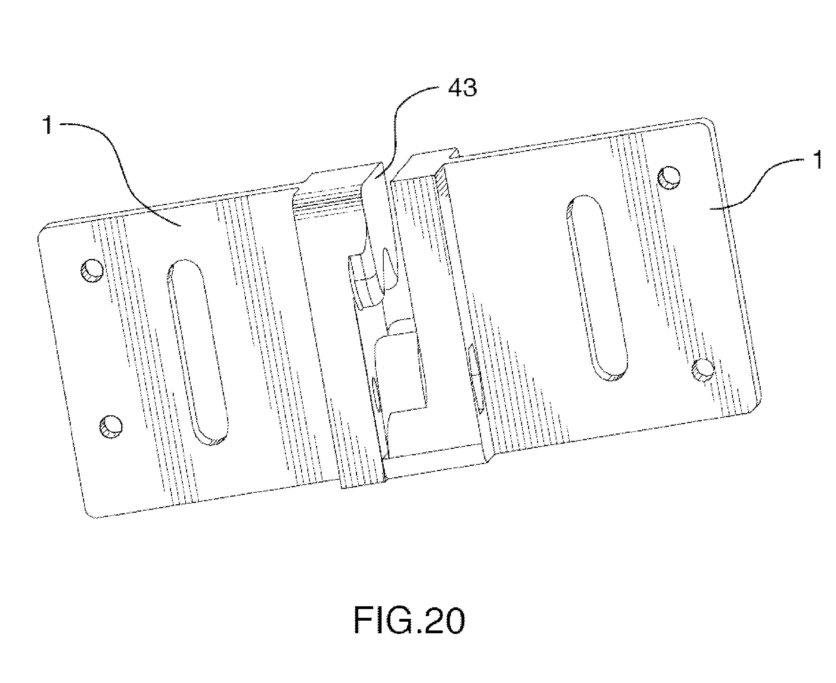

In the fourth embodiment as shown in Figure 20, the bracket 1 has a beam engaging clamp face to contact the beam hole edge 39 and the laterally extending bolts 40 joining the pair of support brackets 1 serve as a biasing device to urge the beam clamping surface toward the support body in an opposing pair.

Although the above description relates to a specific preferred embodiment as presently contemplated by the inventor, it will be understood that the invention in its broad aspect includes mechanical and functional equivalents of the elements described herein.

## Claims

1. A support bracket (1) for mounting wires, cables, conduits and the like (2) to floor beams (3) of an aircraft passenger cabin floor without modification to the floor beams (3), the floor beams (3) having a top flange (4), a bottom flange (5), and a vertical web (6) therebetween, **characterized in that** the support bracket (1) comprises:
a support body (10) having a plurality of cradles (11) wherein each cradle (11) has an engaging surface (12) and a tie wrap passage (13); and
at least one beam engaging member (14, 15, 29) connected to the support body (10), the beam engaging member (14, 15, 29) having a beam clamping surface (16) and biasing device (17) to urge the beam clamping surface (16) toward the support body (10).

2. A support bracket (1) according to claim 1 **characterized in that** the support body (10) extends vertically and the beam engaging member (14, 15) comprises a top flange arm (14) and a bottom flange arm (15).

3. A support bracket (1) according to claim 2 **characterized in that** each arm (14, 15) includes an end hook (18) adapted to wrap partially around an edge of one of said flanges (4, 5).

4. A support bracket (1) according to any preceding claim **characterized in that** the body includes a removable post (23, 27) having a plurality of cradles (11, 25, 26) wherein each cradle has an engaging surface (12) and a wrap tie passage (13).

5. A support bracket (1) according to claim 4 **characterized in that** the engaging surface (12) of a first cradle (25) is oriented perpendicular to the engaging surface (12) of a second cradle (26).

6. A support bracket (1) according to any preceding claim 1 **characterized in that** the beam engaging member (29, 32) comprises at least one clamping block (29, 32) with a beam clamping surface (31).

7. A support bracket (1) according to claim 6 **characterized in that** the biasing device (28) to urge the beam clamping surface (31) toward the support body comprises a connector (28) engaging the clamping block (29) and support body (10).

8. A support bracket (1) according to claim 6 or 7 **characterized in that** the clamping block (29) includes a fulcrum projection (30).

9. A support bracket (1) according to claim 8 **characterized in that** the body (10) includes a fulcrum recess (44) mating the fulcrum projection (30).

10. A support bracket (1) according to any preceding claim **characterized in that** beam engaging member (34) comprises a lateral slot (34) defining an internal beam clamping surface (34) and wherein the biasing device (33) to urge the beam clamping surface (34) toward the support body comprises a laterally extending connector (33) adapted to join the support bracket (1) with a like support bracket (1) in an opposing pair.

11. A support bracket (1) according to claim 10 including a spacer plate (37) engageable in said lateral slot (34).

12. A support bracket (1) according to any preceding claim **characterized in that** the web (6) of said beam (3) includes holes (38) defining hole edges (39), the beam engaging member comprising a clamp block (1) with beam hole edge clamping surface (43) and wherein the biasing device to urge the beam clamping surface (43) toward the support body comprises a laterally extending connector (40) adapted to join the support bracket (1) with a like support bracket (1) in an opposing pair.

13. A support bracket (1) according to claim 12 **characterized in that** the body includes removable cradles (41, 42) mounted to the body with connectors (40).
